# EUROPÄISCHE PATENTSCHRIFT

(11) **EP 3 133 305 B1**
(45) Veröffentlichungstag und Bekanntmachung des Hinweises auf die Patenterteilung: **20.09.2017**
(21) Anmeldenummer: 15181793.9
(22) Anmeldetag: 20.08.2015
(51) Int. Cl.: F16B 37/04

(54) **KÄFIGMUTTER**
CAGE NUT
ÉCROU CAGE

(43) Veröffentlichungstag der Anmeldung: 22.02.2017
(73) Patentinhaber: NEDSCHROEF PLETTENBERG GmbH, 58840 Plettenberg (DE)
(72) Erfinder: Teper, Emrullah, 58640 Iserlohn (DE); Peil, Andreas, 58640 Iserlohn (DE)
(74) Vertreter: Patentanwälte Dörner & Kötter PartG mbB

(56) Entgegenhaltungen:
- WO-A1-2012/084163
- DE-U1-202011 107 965

## Beschreibung

Die Erfindung betrifft eine Käfigmutter, umfassend eine Mutter mit einem radial überstehenden, zwei parallel zueinander gegenüberliegend angeordnete Seitenflächen aufweisenden Flansch und einer gewindehülsenartigen Schraubenaufnahme, ein Halteblech mit einem an zwei gegenüberliegenden Seiten parallel zueinander angeordnete rechtwinklig abgekantete Schenkel aufweisenden Deckblech, das mit einer Durchtrittsöffnung versehen ist, die von der Schraubenaufnahme der Mutter durchdrungen ist, sowie eine Verbindungsbuchse, welche die Schraubenaufnahme der Mutter umschließt und die an ihren beiden Enden jeweils einen umlaufenden Kragen aufweist, welche Kragen das Deckblech des Halteblechs beidseitig im Bereich der Durchtrittsöffnung bereichsweise abdecken.

Eine derartige Käfigmutter ist aus der WO 2012/084163 A1 bekannt. Solche Käfigmuttern finden als Teil einer Schrauben-Mutter-Verbindung Verwendung, über welche zu montierende Bauteile an einem Widerlager festgelegt werden. Zur Vereinfachung der Montage wird die Käfigmutter beispielsweise an der Karosserie eines Fahrzeugs, angeschweißt. Beim späteren Eindrehen der Schraube in das Mutterngewinde bietet das Halteblech eine drehfeste Abstützung für die Mutter. Gleichzeitig verhindert das als Käfig wirkende Halteblech ein Ausweichen der Mutter in axialer Richtung der Schraube. Zusätzliche Fixierwerkzeuge sind daher zum Eindrehen der Schraube in die Mutter nicht erforderlich. Nachteilig an der vorbekannten Käfigmutter ist, dass diese relativ aufwändig zu montieren ist.

Hier will die Erfindung Abhilfe schaffen. Der Erfindung liegt die Aufgabe zu Grunde, eine Käfigmutter bereitzustellen, bei der die Montierbarkeit verbessert ist. Gemäß der Erfindung wird diese Aufgabe dadurch gelöst, dass die Verbindungshülse mehrteilig ausgebildet ist, wobei wenigstens ein endseitiger Kragen durch eine Clipsscheibe gebildet ist, die mit der Verbindungshülse formschlüssig verbunden ist.

Mit der Erfindung ist eine Käfigmutter bereitgestellt, bei der die Montierbarkeit verbessert ist. Durch die mehrteilige Ausbildung der Verbindungsbuchse, die durch das Hülsenteil mit der an dieser angeordneten Clipsscheibe gebildet ist, ist eine nunmehr axiale Montage von Verbindungsbuchse und Mutter ermöglicht. Durch die formschlüssige Verbindung der Clipsscheibe mit dem Hülsenteil ist die Montage erleichtert. Vorzugsweise ist die wenigstens eine Clipscheibe mit dem Hülsenteil verrastet.

In Weiterbildung der Erfindung ist die Verbindungsbuchse aus nicht metallischem Material, vorzugsweise aus Kunststoff ausgebildet. Hierdurch ist eine elektrische Entkopplung der Mutter von dem Halteblech erzielt. Nach Befestigung der Käfigmutter beispielsweise an einer Karosserie eines Fahrzeugs wird das komplette Fahrzeugbauteil lackiert. Im Zuge des Lackierervorgangs eines Karosserieteils wird der aufzutragende Lack elektrisch geladen, wobei das zu lackierende Bauteil entgegengesetzt zum aufgetragenen Lack gepolt wird. Hierdurch ist bewirkt, dass der Lack definiert auf allen Bauteilen anhaftet, welche während des Lackierprozesses unter Strom stehen. Durch die elektrische Entkopplung der Mutter von dem Halteblech wird ein Verkleben der Mutter innerhalb des Halteblechs vermieden, wodurch die Funktion eines Toleranzausgleichs der innerhalb des Halteblechs schwimmend gelagerten Mutter beeinträchtigt würde. Zudem ist verhindert, dass das Gewinde der Mutter mit Lack zugesetzt wird, wodurch ein Einbringen einer Schraube in die Mutter verhindert würde.

Weiterhin sind durch die vorzugsweise aus Kunststoff ausgebildete Verbindungsbuchse Klappergeräusche des von dieser aufgenommenen Mutter vermieden. Dies ist insbesondere bei optional in einem Fahrzeug vorgesehenen Käfigmuttern wichtig, da ansonsten im Betrieb des Fahrzeugs die in dem Halteblech frei bewegliche Mutter metallische Klappergeräusche verursachen würde.

In weiterer Ausgestaltung der Erfindung ist der an der den Schenkeln des Halteblechs entgegengerichteten Oberseite des Deckblechs angeordnete Kragen als Federelement, bevorzugt in Art einer Tellerfeder ausgebildet. Hierdurch ist eine gleichmäßige Vorspannung bewirkt, wodurch eine axiale Ausrichtung der Verbindungsbuchse erzielt ist.

In Weiterbildung der Erfindung weist der an der den Schenkeln des Halteblechs zugewandten Unterseite des Deckblechs angeordnete Kragen eine im Wesentlichen rechteckige Außenkontur auf, wobei an zwei gegenüberliegenden Seiten parallel zu den Schenkeln des Halteblechs jeweils ein Flügel angeformt ist. Hierdurch ist die Verbindungsbuchse über den Kragen beidseitig an den Schenkeln des Halteblechs geführt.

In Ausgestaltung der Erfindung ist der Kragen mit federnden Bereichen versehen, die vorzugsweise einen V-förmigen Querschnitt aufweisen. Hierdurch ist eine Erhöhung der Vorspannung zwischen Halteblech und Verbindungsbuchse erzielt.

In weiterer Ausgestaltung der Erfindung weisen die Schenkel auf ihrer dem jeweils gegenüberliegenden Schenkel zugewandten Innenseite eine Nut auf, in die ein Kragen der Verbindungsbuchse eingreift. Hierdurch ist eine Fixierung des Kragens in dem Halteblech erzielt.

In Weiterbildung der Erfindung weist die Durchtrittsöffnung eine geschlossene, vorzugsweise kreisrunde Innenkontur auf. Hierdurch ist die Stabilität des Halteblechs erhöht. Vor dem Hintergrund der axialen Montagerichtung ist der im Stand der Technik erforderliche Einführungsschlitz nicht erforderlich.

In Ausgestaltung der Erfindung weist die Schraubenaufnahme eine unrunde, bevorzugt in Form eines Vielkants, insbesondere eines Zwölfkants ausgebildete Außenkontur auf, wobei der Durchgang der Verbindungsbuchse ebenfalls eine unrunde, mit der Außenkontur der Schraubenaufnahme korrespondierende Innenkontur aufweist. Hierdurch ist eine Verdrehsicherung zwischen Mutter und Verbindungsbuchse erzielt. Weiterhin ist hierdurch eine Positionierung und Fixierung der Mutter in einer definierten Drehposition ermöglicht.

In weiterer Ausgestaltung der Erfindung ist die Schraubenaufnahme mit der Verbindungsbuchse über eine Presspassung verbunden. Hierdurch ist eine axiale Fixierung der Mutter in der Verbindungsbuchse bewirkt. Die im Stand der Technik erforderliche bügelartige Verformung des Halteblechs zur Verliersicherung der Mutter ist so nicht mehr erforderlich.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Käfigmutter
a) in der Seitenansicht;
b) in räumlicher Darstellung;
c) in Detaildarstellung des Hülsenteils der Verbindungsbuchse;
- Figur 2: die schematische Darstellung einer Käfigmutter in einer weiteren Ausführungsform
a) in der Seitenansicht;
b) in räumlicher Darstellung;
c) in Detaildarstellung des Hülsenteils der Verbindungsbuchse;
- Figur 3: die schematische Darstellung der Mutter der Käfigmutter aus Figur 1;
- Figur 4: die schematische Explosionsdarstellung einer Käfigmutter in einer weiteren Ausführungsform;
- Figur 5: die Käfigmutter aus Figur 4 in räumlicher Darstellung;

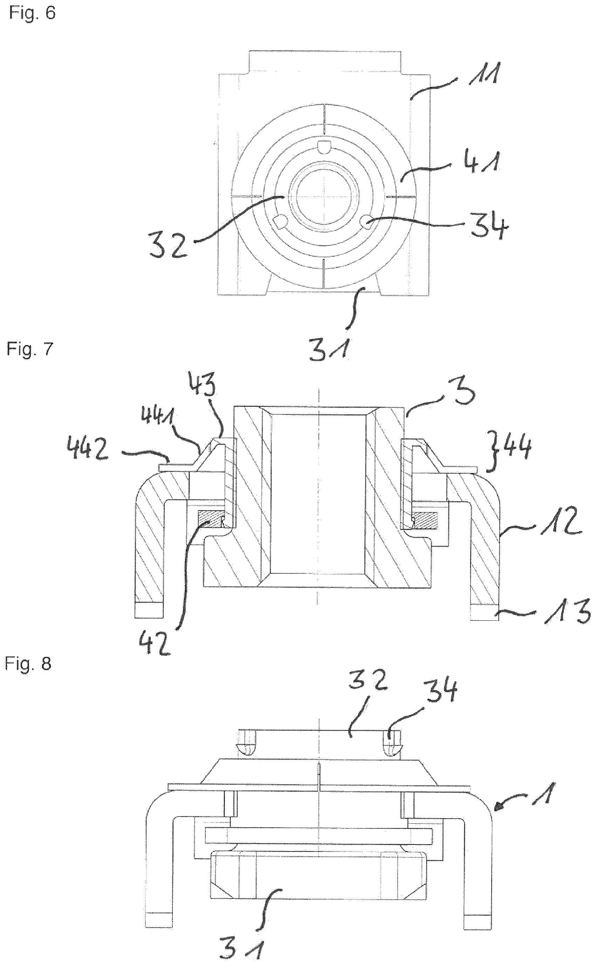

- Figur 6: die Darstellung der Käfigmutter aus Figur 4 in der Draufsicht;
- Figur 7: die Darstellung der Käfigmutter aus Figur 4 im Längsschnitt;
- Figur 8: die Darstellung der Käfigmutter aus Figur 4 in der Vorderansicht;
- Figur 9: die schematische Darstellung der Verbindungsbuchse der Käfigmutter aus Figur 4;
a) in der Seitenansicht;
b) in räumlicher Darstellung;
c) in einer weiteren räumlichen Darstellung;
- Figur 10: die schematische Darstellung der Verbindungsbuchse aus Figur 9
a) im Querschnitt;
b) in Detaildarstellung der Clipsverbindung;
- Figur 11: die schematische Darstellung der Clipsscheibe der Verbindungsbuchse aus Figur 10;
- Figur 12: die schematische Darstellung des Hülsenteils der Verbindungsbuchse aus Figur 10;
- Figur 13: die schematische Explosionsdarstellung einer Käfigmutter in einer dritten Ausführungsform;
- Figur 14: die Käfigmutter aus Figur 13 in räumlicher Darstellung;

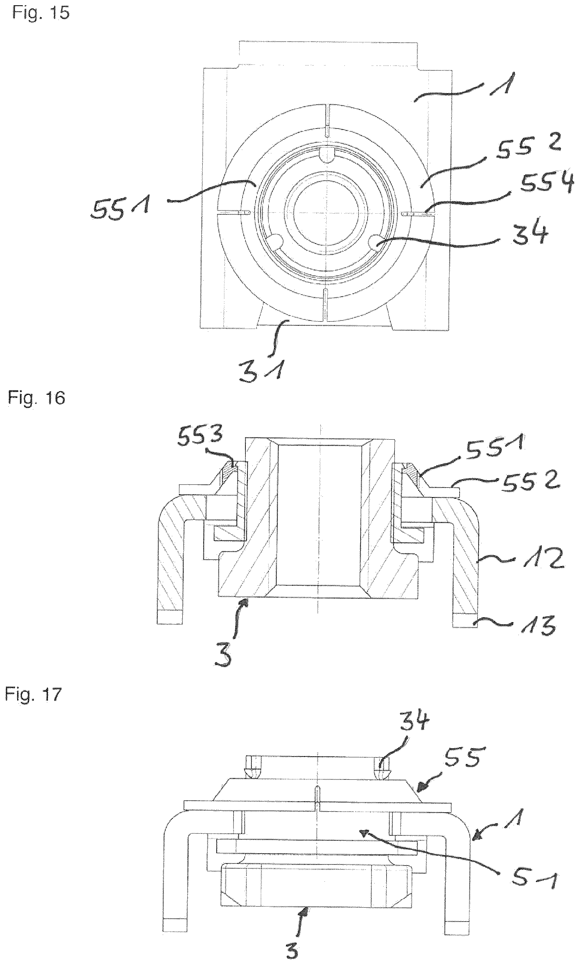

- Figur 15: die Darstellung der Käfigmutter aus Figur 13 in der Draufsicht;
- Figur 16: die Darstellung der Käfigmutter aus Figur 13 im Längsschnitt;
- Figur 17: die Darstellung der Käfigmutter aus Figur 13 in der Vorderansicht;

- Figur 18: die schematische Darstellung der Verbindungsbuchse der Käfigmutter aus Figur 13
a) in Längsschnittdarstellung;
b) in Detaildarstellung der Clipsverbindung und
- Figur 19: die schematische Darstellung des Kragens der Verbindungsbuchse aus Figur 18 in der Ansicht von unten in einer modifizierten Form.

Die als Ausführungsbeispiel gewählte Käfigmutter ist gebildet aus einem Halteblech 1, das von einer Verbindungsbuchse 2 durchdrungen ist, die eine Mutter 3 aufnimmt.

Das Halteblech 1 ist im Ausführungsbeispiel als Stanzteil ausgebildet, mit einem Deckblech 11, das an zwei gegenüberliegenden Seiten abgekantet ist, wodurch zwei gegenüberliegend angeordnete, orthogonal an das Deckblech 11 angestellte Schenkel gebildet sind. An ihrer freien Längsseite sind an die Schenkel 12 beabstandet zueinander zwei nasenartige Schweißfüße 13 angeformt. Auf ihrer Innenseite sind die Schenkel 12 zueinander gegenüberliegend mit einer Nut 14 versehen. In das Deckblech 11 ist eine im Wesentlichen kreisrunde Durchtrittsöffnung 15 eingebracht, die in einen sich nach außen erweiternden Einführungsschlitz 16 übergeht.

Die Verbindungsbuchse 2 besteht aus einem Hülsenteil 21, dass formschlüssig mit einer Clipsscheibe 23 verbunden ist. Das Hülsenteil 21 umfasst einen hohlzylindrischen Abschnitt 211, an den ein quaderförmig ausgebildeter Kragen 22 angeformt ist, dessen Kanten abgerundet ausgebildet sind. An seinen beiden Längsseiten sind an den Kragen 22 gegenüberliegend zwei Flügel 231 angeformt, die sich parallel zu den Schenkeln 12 des Halteblechs 1 erstrecken. Die Flügel 231 des Kragens 22 greifen in die Nuten 14 der Schenkel 12 des Halteblechs 1 ein. Der hohlzylindrische Abschnitt 211 des Hülsenteils 21 ist mit einer umlaufenden - nicht dargestellten - Rastnut versehen, in die eine umlaufende - nicht dargestellte - Rastnase der Clipsscheibe 23 eingreift, so dass eine formschlüssige Clipsverbindung gebildet ist. Das Hülsenteil 21 ist im Ausführungsbeispiel aus Kunststoff hergestellt und steht seitlich über die aus Metall hergestellte Mutter 3 hinaus. Hierdurch ist bewirkt, dass die metallische Mutter 3 und das Halteblech 1 nicht aneinanderschlagen, wodurch eine hierdurch entstehende Geräuschentwicklung verhindert ist.

Die Clipsscheibe 23 ist in Form einer Kreisringscheibe ausgebildet, deren Innendurchmesser im Wesentlichen dem Außendurchmesser des hohlzylindrischen Abschnitts 211 des Hülsenteils 21 entspricht, auf dem die Clipsscheibe 23 aufgesteckt ist, so dass die Clipsscheibe 23 auf dem Deckblech 11 des Halteblechs 1 die Durchtrittsöffnung 15 umrahmend aufliegt.

Die Mutter 3 weist einen im Wesentlichen quaderförmiger Flansch 31 auf, an dem eine Schraubenaufnahme 32 angeformt ist, deren Außenmantelfläche im Ausführungsbeispiel mit einer Vielkantkontur 33 versehen ist. Die Vielkantkontur 33 korrespondiert mit einer in die Innenmantelfläche des hohlzylindrischen Abschnitts 211 des Hülsenteils 21 eingebrachte - nicht dargestellte - Vielkantkontur.

Die Verbindungsbuchse 2 ist derart in das Halteblech 1 eingebracht, dass der hohlzylindrische Abschnitt 211 durch die Durchtrittsöffnung 15 des Deckblechs 11 hindurchragt, wobei die Flügel 231 des Kragens 22 von den Nuten 14 der Schenkel 12 des Halteblechs 1 aufgenommen sind. Die Clipsscheibe 23 ist auf den hohlzylindrischen Abschnitt 211 aufgeclipst und liegt auf dem Deckblech 11 des Halteblechs 1 auf, welches so zwischen dem Kragen 22 und der Klemmscheibe 23 eingeklemmt ist. Die Mutter 3 ist derart in die Verbindungsbuchse 2 eingeführt, dass der Flansch 31 zwischen den Flügeln 231 des Kragens 22 positioniert ist, wobei die Schraubenaufnahme 32 den hohlzylindrischen Abschnitt 211 durchdringt. Endseitig ist die Schraubenaufnahme 32 nach der Montage der Käfigmutter mit Einstemmungen 34 versehen, wodurch die Mutter 3 verliersicher in der Verbindungsbuchse 2 gehalten ist.

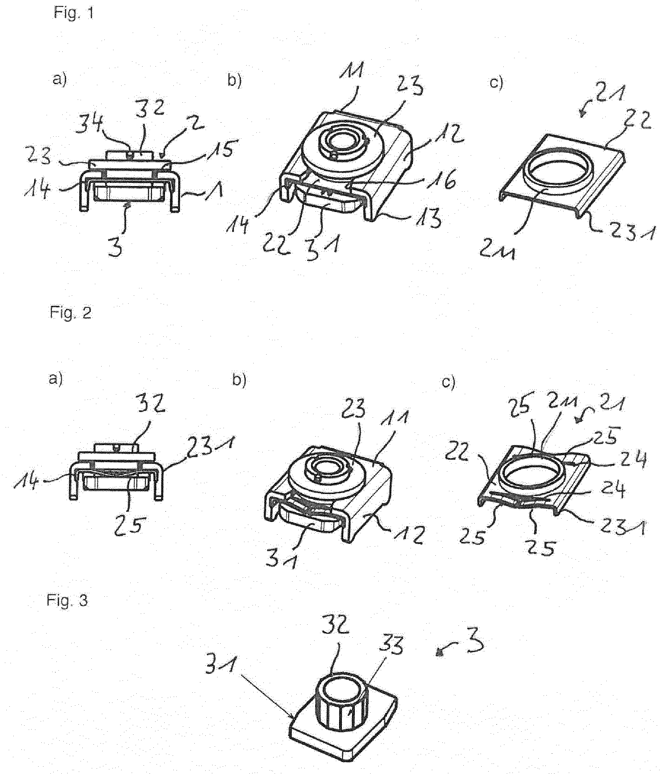

In Figur 2 ist eine Käfigmutter in einer weiteren Ausführungsform dargestellt. Hierbei ist der Kragen 22 des Hülsenteils 21 mit Schlitzen 24 versehen, wodurch jeweils zwei gegenüberliegende Federarme 25 gebildet sind, die gegen den Flansch 31 der Mutter 3 vorgespannt sind, wodurch die Mutter 3 in der Verbindungsbuchse 2 axial verspannt ist.

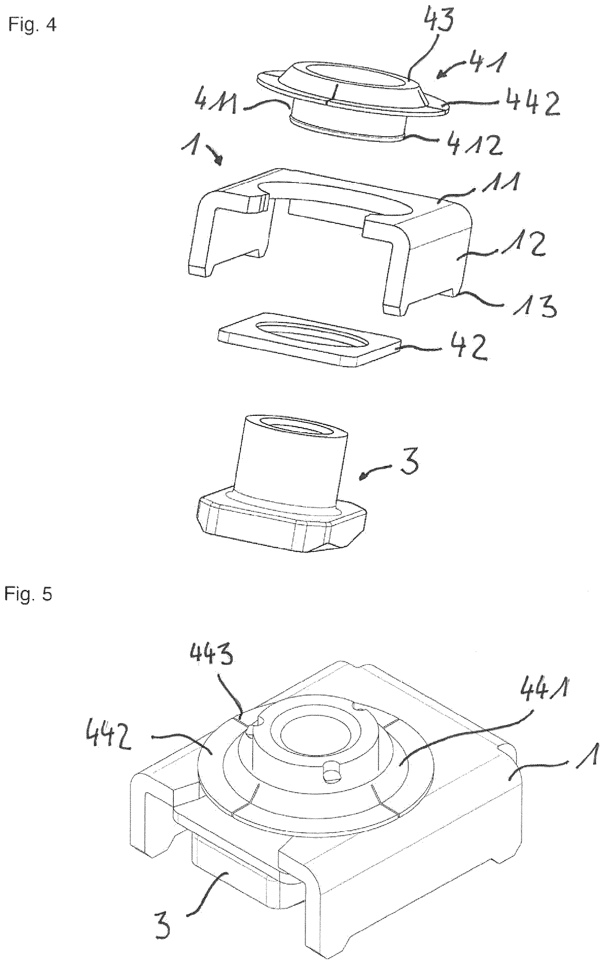

In Figur 4 ist eine weitere Ausführungsform einer Käfigmutter dargestellt. In dieser Ausführungsform umfasst die Verbindungsbuchse 4 wiederum ein Hülsenteil 41, auf das eine Clipsscheibe 42 aufgeclipst ist. Das Hülsenteil 41 umfasst einen hohlzylindrischen Abschnitt 411, an den endseitig ein Kragen 43 angeformt ist, der in einen federnden Bereich 44 übergeht. Der federnde Bereich 44 ist gebildet aus einem konischen Ringabschnitt 441, an den ein orthogonal zum hohlzylindrischen Abschnitt 411 angestellter, ebener Ringabschnitt 442 angeformt ist, sodass der federnde Bereich 44 einen im Wesentlichen V-förmigen Querschnitt aufweist. Dabei ist der federnde Bereich 44 mit vier jeweils um 90° versetzt angeordneten Schlitzen 443 versehen. Der so ausgebildete federnde Bereich 44 wirkt in Art einer Tellerfeder.

An seinem den Kragen 43 entgegengerichteten Ende ist der hohlzylindrische Abschnitt 411 mit einer umlaufenden Rastnase 412 versehen, die mit einer an der Clipsscheibe 42 angeordneten umlaufenden Rastnase 421 derart zusammenwirkt, dass eine Clipsverbindung gebildet ist. Die Clipsscheibe 42 ist in diesem Ausführungsbeispiel in Form einer im Wesentlichen quaderförmigen Platte ausgebildet, deren Kanten abgerundet sind. Etwa mittig ist in der Clipsscheibe 42 eine Bohrung 422 eingebracht, deren Innendurchmesser im Wesentlichen dem Außendurchmesser des hohlzylindrischen Abschnitts 411 des Hülsenteils 41 entspricht und an deren Innenwandung die Rastnase 421 angeformt ist.

Im montiertem Zustand liegt der ebene Ringabschnitt 442 des Hülsenteils 4 auf dem Deckblech 11 eines Halteblechs 1 die Durchtrittsöffnung 15 einrahmend auf, wobei der hohlzylindrische Abschnitt 411 durch die Durchtrittsöffnung 15 hindurchtritt. Das Deckblech 11 des Halteblechs 1 ist so zwischen dem ebenen Rlngabschnitt 442 des federnden Bereichs 44 auf der einen Seite und der Clipsscheibe 42 auf der anderen Seite eingespannt.

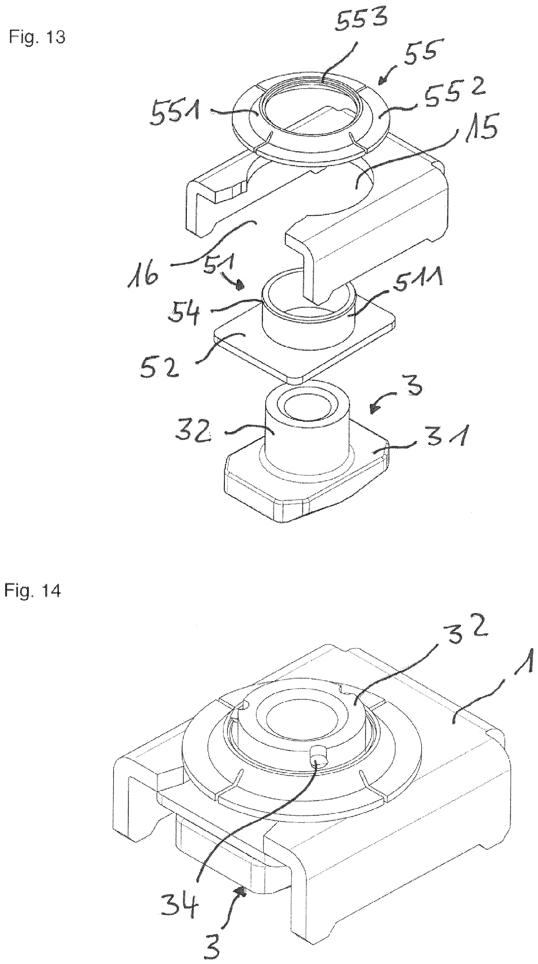

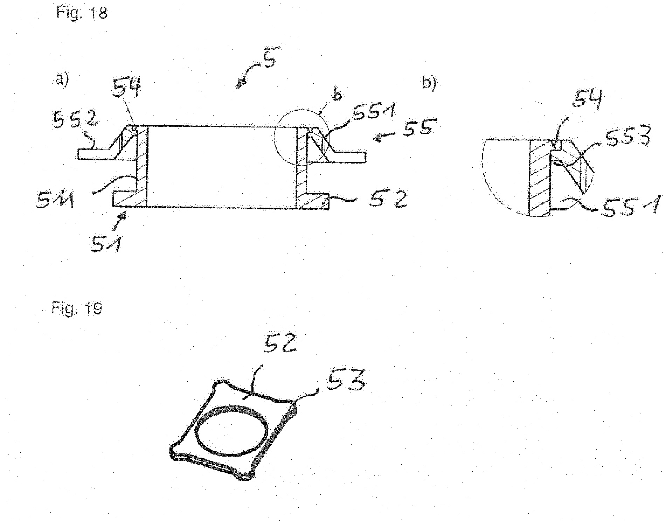

In Figur 13 ist eine dritte Ausführungsform einer Käfigmutter dargestellt. Die Verbindungsbuchse 5 weist in diesem Ausführungsbeispiel ein Hülsenteil 51 auf, das mit einer Clipsscheibe 55 formschlüssig über eine Clipsverbindung verbunden ist. Das Hülsenteil 51 umfasst einen hohlzylindrischen Abschnitt 511, an dessen einem Ende ein Kragen 52 angeformt ist. Der Kragen 52 ist im Wesentlichen quaderförmig ausgebildet, wobei in einer modifizierten Ausführungsform an dessen Kanten Nasen 53 mit einer kreisbogenförmigen Außenkontur angeformt sein können (vgl. Figur 19). An seinem dem Kragen 52 entgegengesetzten Ende ist an dem hohlzylindrischen Abschnitt 511 umlaufend eine Rastnase 54 angeformt.

Die Clipsscheibe 55 ist aus einem konischen Abschnitt 551 sowie einem an diesem angeformten ebenen Ringabschnitt 552 gebildet, wobei an dem konischen Abschnitt 551 an seinem freien Ende umlaufend eine Rastnase 553 angeformt ist, die mit der Rastnase 54 des hohlzylindrischen Abschnitts 511 des Hülsenteils 51 derart zusammenwirkt, dass eine Clipsverbindung gebildet ist. Dabei ist der ebene Ringabschnitt 552 mit vier jeweils um 90° versetzt angeordneten Schlitzen 553 versehen. Im montierten Zustand ist der ebene Ringabschnitt 552 der Clipsscheibe 55 orthogonal zum hohlzylindrischen Abschnitt 511 angeordnet.

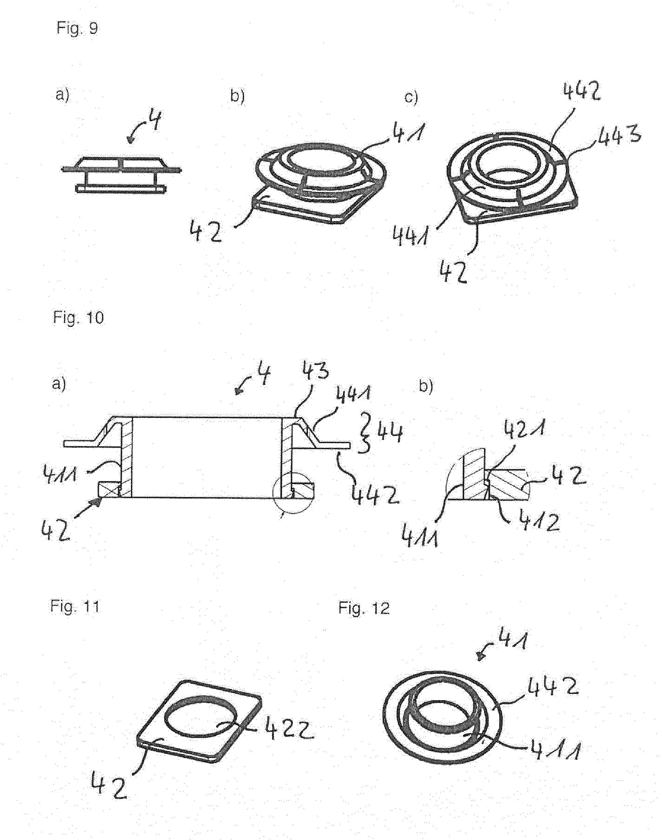

Der wesentliche Unterschied der in den Figuren 9 und 18 dargestellten Ausführungsformen einer Verbindungsbuchse besteht darin, das einmal der auf dem Deckblech des Halteblechs aufliegende Teil als Clipsscheibe ausgebildet ist und das andere Mal der zwischen den Schenkeln des Halteblechs befindliche kragenartige Teil als Clipsscheibe ausgebildet ist. Selbstverständlich kann der zwischen den Schenkeln 12 des Halteblechs 1 befindliche kragenartige Abschnitt auch mit angeformten Flügeln versehen sein, wie in Figur 1c) dargestellt. Er kann darüber hinaus auch, wie in Figur 2c) gezeigt, Federarme aufweisen, um eine verbesserte Verspannung der Mutter 3 in der Verbindungsbuchse zu erzielen.

## Patentansprüche

1. Käfigmutter, umfassend eine Mutter (3) mit einem radial überstehenden, zwei parallel zueinander gegenüberliegend angeordnete Seitenflächen aufweisenden Flansch (31) und einer gewindehülsenartigen Schraubenaufnahme (32), ein Halteblech (1) mit einem an zwei gegenüberliegenden Seiten parallel zueinander angeordnete rechtwinklig abgekantete Schenkel (12) aufweisenden Deckblech (11), das mit einer Durchtrittsöffnung (15) versehen ist, die von der Schraubenaufnahme (32) der Mutter (3) durchdrungen ist, sowie eine Verbindungsbuchse (2, 4, 5), welche die Schraubenaufnahme (32) der Mutter (3) umschließt und die an ihren beiden Enden jeweils einen umlaufenden Kragen aufweist, welche Kragen das Deckblech (11) des Halteblechs (1) beidseitig im Bereich der Durchtrittsöffnung (15) bereichsweise abdecken, **dadurch gekennzeichnet, dass** die Verbindungsbuchse (2, 4, 5) mehrteilig ausgebildet ist, wobei wenigstens ein endseitiger Kragen durch eine Clipsscheibe (23, 42, 55) gebildet ist, die mit einem Hülsenteil (21, 41, 51) formschlüssig verbunden ist.

2. Käfigmutter nach Anspruch 1, **dadurch gekennzeichnet, dass** die wenigstens eine Clipsscheibe (23, 42, 55) mit dem Hülsenteil (21, 41, 51) verrastet ist.

3. Käfigmutter nach Anspruch 1 oder 2, **dadurch gekennzeichnet, dass** die Verbindungsbuchse (2, 4, 5) aus nicht metallischem Material, vorzugsweise aus Kunststoff ausgebildet ist.

4. Käfigmutter nach einem der vorgenannten Ansprüche, **dadurch gekennzeichnet, dass** der an der den Schenkeln (12) des Halteblechs (1) entgegen gerichteten Oberseite des Deckblechs (11) angeordnete Kragen als Federelement, bevorzugt in Art einer Tellerfeder ausgebildet ist.

5. Käfigmutter nach einem der vorgenannten Ansprüche, **dadurch gekennzeichnet, dass** der an der den Schenkeln (12) des Halteblechs (1) zugewandten Unterseite des Deckblechs (11) angeordnete Kragen eine im Wesentlichen rechteckige Außenkontur aufweist, wobei an zwei gegenüberliegenden Seiten parallel zu den Schenkeln (12) des Halteblechs (1) jeweils ein Flügel (231) angeformt ist.

6. Käfigmutter nach Anspruch 5, **dadurch gekennzeichnet, dass** der Kragen mit wenigstens einem federnden Bereich (44) versehen ist.

7. Käfigmutter nach Anspruch 6, **dadurch gekennzeichnet, dass** wenigstens ein federnder Bereich (44) einen V-förmigen Querschnitt aufweist.

8. Käfigmutter nach einem der vorgenannten Ansprüche, **dadurch gekennzeichnet, dass** die Schenkel (12) auf ihrer dem jeweils gegenüberliegenden Schenkel (12) zugewandten Innenseite eine Nut (14) aufweisen, in die ein Kragen der Verbindungsbuchse (2) eingreift.

9. Käfigmutter nach einem der vorgenannten Ansprüche, **dadurch gekennzeichnet, dass** die Durchtrittsöffnung (15) eine geschlossene, vorzugsweise kreisrunde Innenkontur aufweist.

10. Käfigmutter nach einem der vorgenannten Ansprüche, **dadurch gekennzeichnet, dass** die Schraubenaufnahme (32) eine unrunde, bevorzugt in Form eines Vielkants, insbesondere eines Zwölfkants ausgebildete Außenkontur (33) aufweist, wobei der Durchgang der Verbindungsbuchse (2, 4, 5) ebenfalls eine unrunde, mit der Außenkontur der Schraubenaufnahme (32) korrespondierende Innenkontur aufweist.

11. Käfigmutter nach einem der vorgenannten Ansprüche, **dadurch gekennzeichnet, dass** die Schraubenaufnahme (32) mit der Verbindungsbuchse (2, 4, 5) über eine Presspassung verbunden ist.

## Claims

1. Cage nut, comprising a nut (3) having a radially projecting flange (31) with two parallel lateral surfaces arranged opposite one another and a bolt seat (32) similar to a threaded sleeve, a retaining plate (1) with a cover plate (11) with a leg (12) folded to form a right angle on two opposite sides, which legs are arranged parallel to one another, having an opening (15) through which the bolt seat (32) of the nut (3) passes, and a connecting sleeve (2, 4, 5) embracing the bolt seat (32) of the nut (3), with a circum-ferantial collar at each of its two ends, which collars partially cover the cover plate (11) of the retaining plate (1) on either side in the area of the opening (15), **characterised in that** the connecting sleeve (2, 4, 5) is formed in several parts where at least one end collar is formed by a clip disk (23, 42, 55) which is fitted positively to a sleeve section (21, 41, 51).

2. Cage nut in accordance with claim 1, **characterised in that** the at least one clip disk (23, 42, 55) interlocks with the sleeve section (21, 41, 51).

3. Cage nut in accordance with claim 1, **characterised in that** the connecting sleeve (2, 4, 5) is made of a non-metallic material, preferably plastic.

4. Cage nut in accordance with any of the preceding claims, **characterised in that** the collar arranged on the upper side of the cover plate (11) facing the legs (12) of the retaining plate (1) is formed as a spring element, preferably in the manner of a spring washer.

5. Cage nut in accordance with any of the preceding claims, **characterised in that** the collar arranged on the underside of the cover plate (11) facing the legs (12) of the retaining plate (1) has a substantially right-angled outer contour, where a wing (231) is formed on each of two opposing sides parallel to the legs (12) of the retaining plate (1).

6. Cage nut in accordance with claim 5, **characterised in that** the collar has at least one elastic area (44).

7. Cage nut in accordance with claim 6, **characterised in that** at least one elastic area (44) has a V-shaped cross section.

8. Cage nut in accordance with any of the preceding claims, **characterised in that** the legs (12) have a groove (14) on their inner side facing the opposite leg (12) into which a collar of the connecting sleeve (2) engages.

9. Cage nut in accordance with any of the preceding claims, **characterised in that** the opening (15) has a closed, preferably circular, inner contour.

10. Cage nut in accordance with any of the preceding claims, **characterised in that** the bolt seat (32) has a non-circular outer contour (33) which is preferably polygonal, in particular bihexagonal, where the inner passage of the connecting sleeve (2, 4, 5) also has a non-circular inner contour corresponding to the outer contour of the bolt seat (32).

11. Cage nut in accordance with any of the preceding claims, **characterised in that** the bolt seat (32) is joined to the connecting sleeve (2, 4, 5) by means of an interference fit.

## Revendications

1. Écrou cage comprenant un écrou (3) avec une bride (31) en saillie radiale présentant deux surfaces latérales parallèles se faisant réciproquement face et un logement (32) de vis en forme de douille filetée, une tôle de retenue (1) avec une tôle couvercle (11) présentant des branches (12) à bords relevés à angle droit agencées mutuellement parallèles sur deux côtés se faisant face, tôle couvercle qui est munie d'un orifice de passage (15) traversé par le logement (32) de vis de l'écrou (3), ainsi que comprenant une douille de liaison (2, 4, 5) qui entoure le logement (32) de vis de l'écrou (3) et qui à ses deux extrémités présente chaque fois un col périphérique, lesquels cols recouvrent localement la tôle couvercle (11) de la tôle de retenue (1) des deux côtés dans la zone de l'orifice de passage (15), **caractérisé en ce que** la douille de liaison (2, 4, 5) est configurée en plusieurs parties, sachant qu'au moins un col d'extrémité est formé par une rondelle clipsée (23, 42, 55) reliée par adhérence de formes avec une pièce en forme de douille (21, 41, 51).

2. Écrou cage selon la revendication 1, **caractérisé en ce qu'**au moins une rondelle clipsée (23, 42, 55) est verrouillée avec la pièce en forme de douille (21, 41, 51).

3. Écrou cage selon la revendication 1 ou 2, **caractérisé en ce que** la douille de liaison (2, 4, 5) est fabriquée en matériau non métallique, de préférence en plastique.

4. Écrou cage selon l'une des revendications précédentes, **caractérisé en ce que** le col disposé contre le dessus de la tôle couvercle (11) regardant en direction opposée aux branches (12) de la tôle de retenue (1) est configuré comme élément ressort, de préférence sous forme de ressort assiette.

5. Écrou cage selon l'une des revendications précédentes, **caractérisé en ce que** le col agencé contre la face inférieure de la tôle couvercle (11) regardant les branches (12) de la tôle de retenue (1) présente un contour extérieur essentiellement rectangulaire, sachant que respectivement une aile (231) est modelée contre deux côtés se faisant face parallèlement aux branches (12) de la tôle de retenue (1).

6. Écrou cage selon la revendication 5, **caractérisé en ce que** le col est muni d'au moins une zone (44) amortisseuse.

7. Écrou cage selon la revendication 6, **caractérisé en ce qu'**au moins une zone amortisseuse (44) présente une section en V.

8. Écrou cage selon l'une des revendications précédentes, **caractérisé en ce que** les branches (12) présentent une rainure (14) sur leur côté intérieur regardant la branche (12) située respectivement en face, rainure dans laquelle engrène un col de la douille de liaison (2).

9. Écrou cage selon l'une des revendications précédentes **caractérisé en ce que** l'orifice de passage (15) présente un contour intérieur fermé de préférence circulaire.

10. Écrou cage selon l'une des revendications précédentes, **caractérisé en ce que** le logement (32) de vis présente un contour extérieur (33) non circulaire, configuré de préférence en forme de polygone, en particulier de dodécagone, sachant que l'orifice de passage de la douille de liaison (2, 4, 5) présente également un contour intérieur non circulaire qui épouse le contour extérieur du logement (32) de vis.

11. Écrou cage selon l'une des revendications précédentes, **caractérisé en ce que** le logement (32) de vis est relié à la douille de liaison (2, 4, 5) via un ajustement serti.
